# FASCICULE DE BREVET EUROPEEN

(11) **EP 0 374 067 B1**
(45) Date de publication et mention de la délivrance du brevet: **31.08.1994**
(21) Numéro de dépôt: 89440132.2
(22) Date de dépôt: 11.12.1989
(51) Int. Cl.: D07B 1/18, B66C 1/18

(54) **Procédé de fabrication d'une élingue ou sangle plate de manutention, dont la nappe de brins de câbles est enrobée dans un élastomère de polyuréthane**
Verfahren zum Fertigen einer Schlinge oder eines flachen Lasthebegurtes, wobei der Strang von Kabellitzen mit einem Polyurethanelastomer bekleidet ist
Method for making a sling or a load lifting strap in which the web of cable strands in covered with a polyurethane elastomer

(30) Priorité: 12.12.1988 FR 8816517
(43) Date de publication de la demande: 20.06.1990
(73) Titulaire: CABLERIES D'ALSACE ET DE LORRAINE, S.A., F-67560 Rosheim (FR)
(72) Inventeur: Gillet, Marcel, F-67210 Obernai (FR)
(74) Mandataire: Nuss, Pierre

(56) Documents cités:
- DE-C- 722 958
- FR-A- 1 527 852
- FR-A- 2 166 257
- GB-A- 2 044 726
- GB-A- 2 066 205
- GB-A- 2 157 261
- US-A- 2 561 487
- US-A- 4 052 095
- US-A- 4 171 840

## Description

La présente invention a pour objet un procédé de fabrication d'une élingue ou sangle plate de manutention principalement constituée par une nappe de brins de câbles enrobée d'un revêtement.

Actuellement, les élingues ou les sangles connues sont en général plates (le cas échéant, tressées) et constituées d'une ou plusieurs nappes, elles-mêmes composées de plusieurs brins formés par des câbles métalliques. Ces brins sont maintenus en place par des étriers qui sont en général formés par deux parties semblables enserrant les brins et solidarisés par des rivets. Chaque élingue ou sangle comporte, en outre, deux boucles à chaque extrémité permettant l'accrochage des fardeaux. Un tube est prévu dans chaque boucle, dont la gorge permet le passage des brins. Une telle élingue est connue plus particulièrement du brevet français n° 1 356 699. Dans le certificat d'addition n° 90 038 de ce brevet français est décrit une même élingue, où les deux tubes d'extrémité sont remplacés par deux cosses en forme de coeur renforcées d'axes permettant le passage dans les crochets de levage, pour former une sangle sans surépaisseur.

Ces élingues ou sangles connues sont normalement enrobées dans une composition caoutchoutée de nature appropriée à l'emploi de ces élingues. En général, la nappe de brins de câbles est moulée par injection, sous pression, dans du néoprène, puis vulcanisée à chaud. Or, les élingues ou sangles de ce type présentent un certain nombre d'inconvéients. En effet, la fabrication de telles élingues ou sangles nécessite un outillage très complexe et très sophistiqué. En outre, le revêtement en néoprène présente un vieillissement assez rapide, c'est-à-dire qu'il durcit relativement vite, des craquelures apparaissant à l'usage, favorisant la pénétration des fluides, ces derniers attaquant et détériorant la nappe de brins de câbles. Cette dernière ne pouvant être contrôlée visuellement, du fait de la présence de l'enrobage en néoprène, c'est toute la tenue de l'élingue ou de la sangle qui est mise en cause. De plus, le revêtement en néoprène présente également l'inconvénient de laisser des traces noires sur les charges. Enfin, la technique de fabrication de ces élingues ou sangles implique que chaque brin de câbles soit espacé par rapport à l'autre, ce qui confère à la nappe une très grande largeur.

On connaît par ailleurs du document US-A-4 171 840 un procédé de revêtement partiel d'une élingue monobrin présentant deux bouches manchonnées et tressées. Mais le procédé de fabrication, principalement du fait que l'élingue est suspendue verticalement par l'une de ses bouches, ne permet pas précisément de revêtir les bouches elles-mêmes du matériau synthétique. En conséquence, l'usure de ces bouches sera notamment plus rapide que celle de la partie du corps de l'élingue pourvue du revêtement, ce qui entraîne inévitablement que l'élingue en question présentera tous les inconvénients susmentionnés, à savoir principalement une durée de vie relativement réduite, une sensibilité accrue aux agressions extérieures et un accrochage des fardeaux difficile et dangereux.

Le problème général à résoudre par l'objet de la présente invention consiste à mettre au point un procédé de fabrication d'une élingue ou sangle plate de manutention évitant les inconvénients décrits ci-dessus et permettant l'obtention d'une élingue ou sangle dont le revêtement présente, grâce à de très bonnes résistances au poinçonnement, au cisaillement et à l'abrasion, une durée de vie extrêmement longue, de l'ordre de plusieurs années, malgré une utilisation constante, et qui soit insensible aux agressions de la plupart des fluides (acides, solvants, etc...), donc utilisable dans des atmosphères aussi bien basiques qu'acides ou salines. Par ailleurs, ce revêtement devra être parfaitement transparent, de manière à pouvoir à tout moment permettre un contrôle de la nappe de brins de câbles. Enfin, la largeur d'une telle élingue ou sangle devra être aussi réduite que possible.

A cet effet, l'invention a pour objet un procédé de fabrication d'une élingue ou sangle plate de manutention principalement constituée par une nappe de brins de câbles enrobée d'un revêtement, comportant deux boucles à chaque extrémité permettant l'accrochage de fardeaux, caractérisé en ce qu'il consiste à réaliser préalablement la nappe en prévoyant les brins de câbles accolés et jointifs, et ce tant dans le corps de l'élinque ou sangle que dans les boucles, puis à sécher cette nappe, à la chauffer, à la disposer dans un moule ouvert thermo-régulé, disposé horizontalement, de forme allongée en fonction de la longueur de l'élingue ou sangle, à remplir uniformément le moule d'un élastomère de polyuréthane de manière à noyer la nappe de brins de câbles, à maintenir la nappe de brins de câbles ainsi revêtue à cette même température jusqu'au temps hors poisse, c'est-à-dire jusqu'à la cristallisation et la réticulation des particules, et enfin à démouler l'élingue ou sangle ainsi revêtue de l'élastomère de polyuréthane tant au niveau du corps qu'au niveau des bouches, et à la laisser durcir durant plusieurs heures.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

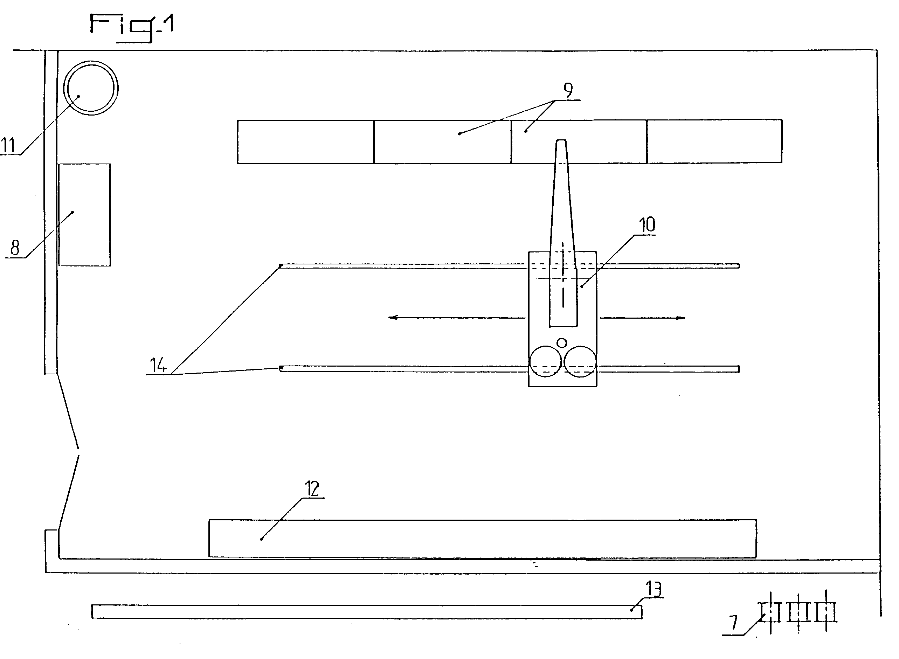

la figure 1 est une vue de dessus d'un atelier de fabrication de telles élingues ou sangles conformes à l'invention ;

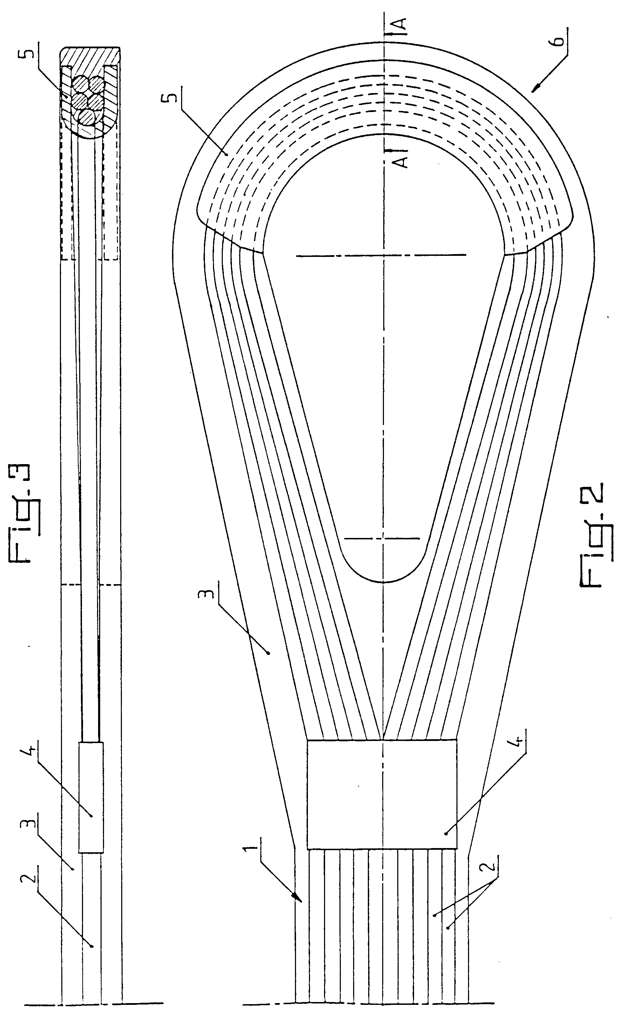

la figure 2 est une vue de dessus de l'une des deux extrémités d'une élingue ou sangle conforme à l'invention, et
la figure 3 est une vue de face et en coupe selon la ligne A-A de la figure 2.

Selon l'invention, le procédé de fabrication consiste à réaliser préalablement la nappe 1 en prévoyant les brins de câbles 2 accolés et jointifs, et ce tant dans le corps de l'élingue ou sangle que dans les boucles 6, puis à sécher cette nappe 1, à la chauffer, à la disposer dans un moule ouvert thermo-régulé, disposé horizontalement, de forme allongée en fonction de la longueur de l'élingue ou sangle, à remplir uniformément le moule d'un élastomère de polyuréthane de manière à noyer la nappe 1 de brins de câbles 2, à maintenir la nappe 1 de brins de câbles 2 ainsi revêtue à cette même température jusqu'au temps hors poisse, c'est-à-dire jusqu'à la cristallisation et la réticulation des particules, et enfin à démouler l'élingue ou sangle ainsi revêtue de l'élastomère de polyuréthane tant au niveau du corps qu'au niveau des boucles 6, et à la laisser durcir durant plusieurs heures.

Dans la pratique, le procédé de fabrication consiste a réaliser successivement principalement les opérations décrites ci-après.

En premier lieu, on réalise une nappe 1 de brins de câbles 2. Ceci consiste à mettre en place sur un gabarit 13 adapté à la longueur des élingues ou sangles (par exemple 1,50 m, 2,50 m, 4 m, 6 m, 8 m, 10 m, etc...) un écheveau de câbles en rapport avec la résistance et la charge maximale d'utilisation de l'élingue ou de la sangle, à monter ladite nappe 1 avec tous les brins équilibrés sous une même tension, à l'équiper de brides de maintien 4 des brins jointifs 2 et enfin, à introduire les deux extrémités des câbles 2 dans la gorge d'une cosse arceau 5, de manière à conférer la forme et le maintien des deux boucles 6.

Lorsque les brins de câbles 2 formant la nappe 1 sont en fibres métalliques, on procède à un dégraissage, par exemple, par trempage de la nappe 1, préalablement roulée dans un panier 11, dans un bain de solvant d'origine pétrolière, ceci pour améliorer l'adhérence de l'élastomère de polyuréthane qui viendra envelopper la nappe 1. Afin d'éliminer toute trace d'humidité, on pourra utiliser avantageusement le solvant connu sous la dénomination commerciale TECICLEAN S-49 fabriqué par la société TCI ou encore du white spirite à moins de 5 % d'aromatique.

Si les brins de câbles 2 formant la nappe 1 sont en fibres organiques, telles que en polyamide ou en kevlar, un dégraissage préalable est inutile.

La nappe 1 est alors séchée sur un ratelier 7 à température ambiante, à l'air libre, durant environ 10 à 15 mn, afin d'éviter tout risque de moussage.

Lorsque la nappe 1 est sèche et que le moment du moulage est prévu, la nappe 1 est alors introduite dans une armoire ou un tunnel chauffant 8, à une température comprise entre 65 et 95°C, préférentiellement 80°C.

Une fois cette température atteinte, la nappe 1 est montée dans un moule ouvert correspondant qui sera thermo-régulé, c'est-à-dire lui-même préalablement chauffé à cette même température comprise entre 65 et 95°C, préférentiellement 80°C, et maintenu à cette température grâce à une table chauffante 9, horizontale, sur laquelle il est disposé. La nappe 1 est tendue sur l'une des deux boucles 6 grâce à un tendeur, et centrée à l'intérieur du moule.

Ce moule sera avantageusement en aluminium ou en acier. On pourra avoir intérêt à appliquer dans ce moule un agent de démoulage à l'aide d'un pinceau ou par pulvérisation. Plus le revêtement doit être souple et mince, moins il s'échauffe à coeur. C'est pourquoi il est nécessaire de cuire ou de préchauffer le moule pour achever la réticulation.

L'ensemble est alors prêt à recevoir l'élastomère de polyuréthane. Ce dernier étant, de préférence, bi-composé, on procédera au remplissage du moule à l'aide d'une machine 10 bi-composant basse pression à pompes doseuses munie d'un mélangeur dynamique. Une telle machine pourra, par exemple, être une machine de type F fabriquée par la société Elastogran Maschinenbau GbmH, mais avantageusement disposée sur un chemin de rails 14, de manière à lui conférer un déplacement latéral parallèlement au moule, de forme allongée (en fonction de la longueur de l'élingue ou sangle) et posé sur la table chauffante 9, autorisant ainsi un remplissage uniforme du moule.

Cette machine a pour fonction de conditionner la température des composants, de les doser et de les mélanger. Elle comprend au moins deux unités de dosage, l'une pour les polyols et les catalyseurs (composant A) et l'autre pour les polyisocyanates (composant B). Les pompes sont de type basse pression à engrenage et permettent d'obtenir une grande précision dans le dosage des constituants. Il est nécessaire de les faire travailler à pression constante, grâce à un circuit de recyclage mis en service en dehors des périodes de coulée. Pour les machines type basse pression, on utilise une tête de mélange mécanique avec rotor.

Le remplissage du moule s'effectue sous le contrôle d'un opérateur qui commande ladite machine.

Lorsque le moule est rempli, la nappe 1 de brins de câbles 2 ainsi noyée dans l'élastomère de polyuréthane est maintenue à cette même température comprise entre 65 et 95°C, préférentiellement 80°C, durant environ 9 à 15 mn, avantageusement 12 mn, de telle manière que la réaction chimique, à savoir la cristallisation et la réticulation des particules, s'effectue.

L'élingue ou la sangle ainsi obtenue est alors démoulée et mise à sécher durant environ 10 à 15 heures, de préférence 12 heures. A cet effet, elle est stockée à plat sur un support 12 afin de ne pas subir de déformation et durcir complétement.

L'invention a également pour objet une élingue ou sangle obtenue par application du procédé ci-dessus décrit, caractérisée en ce qu'elle est principalement constituée d'une nappe 1 de brins de câbles 2 accollés et jointifs, enrobée d'un revêtement 3 sous la forme d'un élastomère de polyuréthane. Cet élastomère de polyuréthane sera bi-composé A et B, le composant A étant à base de polyols ployester et de catalyseurs et le composant B à base de polyisocyanate aromatique sur base di-isocyanate de diphényluréthane.

Le rapport de la masse volumique du composant A sur celle du composant B est compris entre 100/39 et 100/41, de préférence, 100/40. Selon une autre variante de l'invention, ce rapport pourra aussi être compris entre 100/48 et 100/50, de préférence, 100/49. Selon une troisème variante de l'invention, il pourra être compris entre 100/55 et 100/57, de préférence, 100/56.

On pourra avantageusement utiliser l'élastomère de polyuréthane connu sous la dénomination commerciale ELASTURAN 6010 fabriqué par la société Elastogran. Préférentiellement, on utilisera ceux désignés respectivement par les références 6010/65, 6010/75, ou encore 6010/85.

Les élingues ou sangles fabriquées selon le procédé décrit ci-dessus, présentent donc un revêtement parfaitement transparent, qui peut être légèrement coloré tout en gardant ses propriétés optiques. Si, par exemple, une étiquette de marquage (emplacement de couleur pour les forces, les longueurs, les ateliers d'utilisation, etc...) est collée sur une bride de maintien 4, il sera possible de lire le texte figurant sur cette étiquette, et ce même après plus de 1000 heures d'exposition d'une telle élingue ou sangle sous une lampe xenon de 1500 W (spectre solaire), le revêtement situé au-dessus de l'étiquette présentant, dans ce cas, 10 mm d'épaisseur. La souplesse de ce revêtement a de l'importance, non seulement au niveau de la durée de vie de l'élingue ou de la sangle, mais également au niveau des boucles 6, autorisant ainsi un accrochage aisé des fardeaux. Enfin, la tenue en température d'une telle élingue ou sangle est de l'ordre de - 30°C à + 70°C.

## Revendications

1. Procédé de fabrication d'une élingue ou sangle plate de manutention principalement constituée par une nappe (1) de brins de câbles (2) enrobée d'un revêtement, comportant deux boucles (6) à chaque extrémité permettant l'accrochage de fardeaux, caractérisé en ce qu'il consiste à réaliser préalablement la nappe (1) en prévoyant les brins de câbles (2) accolés et jointifs, et ce tant dans le corps de l'élingue ou sangle que dans les boucles (6), puis à sécher cette nappe (1), à la chauffer, à la disposer dans un moule ouvert thermo-régulé, disposé horizontalement, de forme allongée en fonction de la longueur de l'élingue ou sangle, à remplir uniformément le moule d'un élastomère de polyuréthane de manière à noyer la nappe (1) de brins de câbles (2), à maintenir la nappe (1) de brins de câbles (2) ainsi revêtue à cette même température jusqu'au temps hors poisse, c'est-à-dire jusqu'à la cristallisation et la réticulation des particules, et enfin à démouler l'élingue ou sangle ainsi revêtue de l'élastomère de polyuréthane tant au niveau du corps qu'au niveau des boucles (6), et à la laisser durcir durant plusieurs heures.

2. Procédé de fabrication selon la revendication 1, caractérisé en ce que la réalisation préalable d'une nappe (1) de brins de câbles (2) consiste à mettre en place sur un gabarit (13) adapté à la longueur des élingues ou sangles, un écheveau de câbles en rapport avec la résistance et la charge maximale d'utilisation de l'élingue ou de la sangle, à monter ladite nappe (1) avec tous les brins équilibrés sous une même tension, à l'équiper de brides de maintien (4) des brins jointifs (2) et enfin, à introduire les deux extrémités des câbles (2) dans la gorge d'une cosse arceau (5), de manière à conférer la forme et le maintien des deux boucles (6).

3. Procédé de fabrication selon l'une quelconque des revendications 1 et 2, caractérisé en ce qu'il consiste à réaliser successivement principalement les opérations suivantes :
- réalisation préalable d'une nappe (1) de brins de câbles (2) ;
- séchage de la nappe (1) sur un ratelier (7) à température ambiante durant 10 à 15 mn ;
- chauffage de la nappe (1) à une température comprise entre 65 et 95°C dans une armoire ou un tunnel chauffant (8) ;
- chauffage du moule correspondant disposé sur une table chauffante (9) également à cette température comprise entre 65 et 95°C ;
- montage, dans le moule chauffé, de la nappe (1), cette dernière étant tendue sur une boucle (6) et centrée à l'intérieur du moule ;
- remplissage du moule avec le mélange des deux composants (A et B) de l'élastomère de polyuréthane à l'aide d'une machine (10) bi-composant basse pression à pompes doseuses munie d'un mélangeur dynamique ;
- maintien de la nappe (1) de brins de câbles (2) ainsi enrobée à cette même température comprise entre 65 et 95°C durant environ 9 à 15 mn ;
- démoulage de l'élingue ou de la sangle ainsi obtenue ;
- séchage à plat durant 10 à 15 heures, afin que l'élingue ou la sangle durcisse complètement.

4. Procédé de fabrication selon la revendication 3, caractérisé en ce qu'il consiste, préalablement au séchage de la nappe (1), à procéder à son dégraissage, par exemple, par trempage de la nappe (1), préalablement roulée dans un panier (11), dans un bain de solvant d'origine pétrolière.

5. Procédé de fabrication selon la revendication 3, caractérisé en ce que la nappe (1) de brins de câbles (2) ainsi que le moule seront préférentiellement chauffés à une température de 80°C.

6. Procédé de fabrication selon la revendication 3, caractérisé en ce que pour permettre un remplissage uniforme du moule, la machine (10) est avantageusement disposée sur un chemin de rails (14), de manière à lui conférer un déplacement latéral parallèlement au moule, de forme allongée, disposé sur la table chauffante (9).

7. Procédé de fabrication selon la revendication 3, caractérisé en ce que, après le remplissage du moule avec le mélange des deux composants (A et B), la nappe (1) de brins de câbles (2) enrobée est maintenue à la température de 80°C durant avantageusement 12 mn.

8. Procédé de fabrication selon la revendication 3, caractérisé en ce que, après démoulage, l'élingue ou la sangle obtenue sera, de préférence, stockée à plat sur un support (12) durant 12 heures, afin de ne pas subir de déformation et durcir totalement.

## Claims

1. Method of manufacturing a sling or flat handling strap consisting mainly of a web (1) of cable strands (2) coated with a covering comprising two loops (6) at each end allowing the attachment of loads, characterised in that it involves producing the web (1) beforehand by providing coupled joined cable strands (2) both in the body of the sling or strap and in the loops (6) then drying this web (1), heating it, placing it in a heat-regulated, horizontally arranged open mould of elongate shape as a function of the length of the sling or strap, uniformly filling the mould with a polyurethane elastomer so as to submerge the web (1) of cable strands (2), maintaining the web (1) of cable strands (2) coated in this way at this same temperature until it is not tacky, that is until the particles crystallize and cross link and, finally, removing the sling or strap thus covered with the polyurethane elastomer from the mould both in the region of the body and in the region of the loops (6) and allowing it to set for several hours.

2. Manufacturing method according to claim 1, characterised in that the preliminary production of a web (1) of cable strands (2) involves positioning on a gauge (13) adapted to the length of the slings or straps a hank of cables related to the strength and maximum useful charge of the sling or of the strap, installing said web (1) with all the strands balanced at the same tension, equipping it with fasteners (4) for holding the joined strands (2) and finally introducing the two ends of the cables (2) in the groove of an arcuate stiffener (5) so as to shape and hold the two loops (6).

3. Manufacturing method according to any one of claims 1 and 2, characterised in that it involves successively carrying out the following main operations:
- preliminary production of a web (1) of cable strands (2);
- drying the web (1) on a spool rack (7) at ambient temperature for 10 to 15 minutes;
- heating the web (1) to a temperature of between 65 and 95°C in a heating cupboard or tunnel (8);
- heating the corresponding mould arranged on a heating table (9) also to this temperature of between 65 and 95°C;
- installing the web (1) in the heated mould, the web (1) being tensioned on a loop (6) and centred inside the mould;
- filling the mould with the mixture of the two components (A and B) of the polyurethane elastomer by means of a low-pressure bi-component machine (10) with metering pumps equipped with a dynamic mixer;
- holding the web (1) of cable strands (2) coated in this way at this same temperature of between 65 and 95°C for about 9 to 15 minutes;
- removing the sling or strap thus obtained from the mould;
- flat drying for 10 to 15 hours so that the sling or strap sets completely.

4. Manufacturing method according to claim 3, characterised in that it involves, prior to the drying of the web (1), degreasing it, for example, by soaking the web (1) which has previously been rolled in a basket (11) in a bath of solvent of petroleum origin.

5. Manufacturing method according to claim 3, characterised in that the web (1) of cable strands (2) as well as the mould will preferably be heated to a temperature of 80°C.

6. Manufacturing method according to claim 3, characterised in that, to allow uniform filling of the mould, the machine (10) is advantageously arranged on a railroad (14) so as to impart to it lateral displacement in parallel with the mould of elongate shape arranged on the heating table (9).

7. Manufacturing method according to claim 3, characterised in that, after the filling of the mould with the mixture of the two components (A and B), the coated web (1) of cable strands (2) is maintained at the temperature of 80°C advantageously for 12 minutes.

8. Manufacturing method according to claim 3, characterised in that, after removal from the mould, the sling or strap obtained will preferably be stored flat on a support (12) for 12 hours so as not to undergo deformation and to set completely.

## Patentansprüche

1. Verfahren zum Fertigen einer Schlinge oder eines flachen Lasthebegurtes, welcher im wesentlichen aus einem mit einem Überzug versehenen und an jedem Ende zwei Schlaufen (6) zum Anhängen von Lasten aufweisenden Strang (1) von Kabellitzen (2) besteht, **dadurch gekennzeichnet**, daß der Strang (1) zunächst vorgefertigt wird, indem die Kabellitzen (2) sowohl in dem Schlingen- oder Lasthebegurtkörper als auch in den Schlaufen (6) verbunden und lückenlos vorgesehen werden, daß danach dieser Strang (1) getrocknet, geheizt und in einer offenen, wärmeregulierten, horizontal liegenden, der Länge der Schlinge oder des Lasthebegurtes entsprechend länglichen Gießform angeordnet wird, daß die Gießform zum Tränken des Stranges (1) von Kabellitzen (2) mit einem Polyurethanelastomer gleichmäßig gefüllt wird, daß der auf diese Weise überzogene Strang (1) von Kabellitzen (2) bis zur Aushärtung, d. h. bis zur Kristallisation und Vernetzung der Teilchen auf dieser selben Temperatur gehalten wird, und daß schließlich die so mit dem Polyurethanelastomer überzogene Schlinge oder der so überzogene Lasthebegurt sowohl im Bereich seines Körpers als auch im Bereich der Schlaufen (6) entformt wird und über mehrere Stunden aushärtet.

2. Verfahren nach Anspruch 1, **dadurch gekennzeichnet**, daß die Vorfertigung des Stranges (1) von Kabellitzen (2) darin besteht, daß ein Kabelstück mit der Festigkeit und der höchsten Belastbarkeit der Schlinge oder des Lasthebegurtes auf eine an die Länge der Schlingen oder Gurte angepaßte Lehre (13) eingestellt wird, wobei dieser Strang (1) mit allen Litzen ausgeglichen unter derselben Spannung montiert wird, daß aneinanderstoßende Litzen (2) mit Haltestücken (4) versehen werden, und daß schließlich die beiden Enden der Kabel (2) zur Bildung der Form und Festlegung der beiden Schlaufen (6) in die Rille eines bogenförmigen Kabelschuhs (5) eingeführt werden.

3. Verfahren nach einem der Ansprüche 1 und 2, **dadurch gekennzeichnet**, daß im wesentlichen folgende Schritte nacheinander durchgeführt werden:
- Vorfertigung eines Stranges (1) von Kabellitzen (2);
- Trocknen des Stranges (1) auf einem Gestell (7) bei Umgebungs- oder Zimmertemperatur 10 bis 15 Minuten lang;
- Aufheizen des Stranges (1) auf eine Temperatur zwischen 65 ° C und 95 ° C in einer Heizkammer oder in einem Heizkanal (8);
- Aufheizen der entsprechenden auf einer Heizplatte (9) angeordneten Gießform ebenfalls auf eine Temperatur zwischen 65 ° C und 95 °;
- Einbringen des Stranges (1) in die geheizte Gießform, wobei der Strang (1) als Schlaufe (6) gespannt und innerhalb der Gießform zentriert ist;
- Füllen der Gießform mit der Mischung aus den beiden Polyurethanelastomer-Komponenten (A und B) mittels einer mit einem dynamischen Mischer versehenen Niederdruck-Zwei-Komponenten-Maschine (10) mit Dosierpumpen;
- Halten des so bekleideten Stranges (1) von Kabellitzen (2) bei dieser selben Temperatur von 65 ° C bis 95 °C für die Dauer von etwa 9 bis 15 Minuten;
- Entformen der so gebildeten Schlinge oder des Gurtes;
- Trocknen 10 bis 15 Stunden lang in flacher Lage, so daß die Schlinge oder der Gurt vollständig aushärtet.

4. Verfahren nach Anspruch 3, **dadurch gekennzeichnet**, daß dieser Strang (1) vor dessen Trocknen entfettet wird, z.B. durch Eintauchen des zuvor in einem Korb (11) eingerollten Stranges (1) in einem Öllösungsmittelbad.

5. Verfahren nach Anspruch 3, **dadurch gekennzeichnet**, daß der Strang (1) von Kabellitzen (2) sowie die Gießform vorzugsweise auf eine Temperatur von 80 ° C erwärmt werden.

6. Verfahren nach Anspruch 3, **dadurch gekennzeichnet**, daß die Maschine (10) zum gleichmäßigen Ausfüllen der Gießform derart auf Schienen (14) angeordnet wird, daß sie parallel zu der auf dem Heiztisch (9) angeordneten länglichen Gießform bewegbar ist.

7. Verfahren nach Anspruch 3, **dadurch gekennzeichnet**, daß der bekleidete Strang (1) von Kabellitzen (2) nach dem Ausfüllen der Gießform mit der Mischung der beiden Komponenten (A und B) bei 80 ° C vorteilhafterweise 12 mn lang temperiert wird.

8. Verfahren nach Anspruch 3, **dadurch gekennzeichnet**, daß die Schlinge oder der Gurt nach dem Entformen zur Vermeidung einer Verformung und zum Aushärten vorzugsweise auf einer Auflage zwölf Stunden lang flach gelagert wird.
